# EUROPÄISCHE PATENTSCHRIFT

(11) **EP 2 960 449 B1**
(45) Veröffentlichungstag und Bekanntmachung des Hinweises auf die Patenterteilung: **17.05.2017**
(21) Anmeldenummer: 15173738.4
(22) Anmeldetag: 25.06.2015
(51) Int. Cl.: F01N 3/025, F01N 9/00

(54) **VERFAHREN ZUM BETRIEB EINES ABGASBRENNERS**
METHOD FOR OPERATING AN EXHAUST GAS BURNER
PROCÉDÉ DE FONCTIONNEMENT D'UN BRÛLEUR DE GAZ D'ÉCHAPPEMENT

(30) Priorität: 25.06.2014 DE 102014108878
(43) Veröffentlichungstag der Anmeldung: 30.12.2015
(73) Patentinhaber: TWINTEC Technologie GmbH, 53639 Königswinter (DE)
(72) Erfinder: Margraf, Dr. Jan, 44135 Dortmund (DE); Lücking, Dr. Christof, 58300 Wetter (DE)
(74) Vertreter: Heine, Christian Klaus

(56) Entgegenhaltungen:
- EP-A1- 0 268 026
- EP-A2- 1 788 208
- US-A1- 2008 209 890

## Beschreibung

Die Erfindung betrifft ein Verfahren zum Betrieb eines Abgasbrenners. Abgasbrenner werden in Abgasbehandlungsvorrichtungen üblicherweise eingesetzt, um die Temperatur des Abgases zu erhöhen, so dass Reaktionen in dem Abgas auftreten, die zur Reinigung des Abgases beitragen und die erst ab einer bestimmten Grenztemperatur stattfinden. Besonders häufig werden Abgasbrenner in Abgasbehandlungsvorrichtungen eingesetzt, in denen ein Partikelfilter angeordnet ist. Partikelfilter können während des Betriebs einer Abgasbehandlungsvorrichtung regelmäßig aufgrund von Rußbestandteilen im Abgas verrußen bzw. verstopfen. Durch einen Abgasbrenner können solche Verrußungen eines Partikelfilters effektiv durch thermische Oxidation mit dem im Abgas enthaltenen Sauerstoff entfernt werden.

Aus der EP 1 788 208 A2 ist ein Verfahren zum Überwachen einer Aschebildung in einem Partikelfilter einer Emissionsminderungsbaugruppe bekannt.

Beim Betrieb eines Abgasbrenners ist regelmäßig problematisch, dass auch der Abgasbrenner selbst verrußen kann. Beim Verrußen bilden sich an dem Abgasbrenner ggf. auch Rußablagerungen, welche sich ablösen und den Abgasbrenner sowie dem Abgasbrenner in Strömungsrichtung nachgelagerte Komponenten der Abgasbehandlungsvorrichtung beschädigen können. Darüber hinaus kann die Leistungsfähigkeit des Abgasbrenners durch Rußablagerungen beeinträchtigt werden.

Ausgehend von dieser Situation ist es Aufgabe der vorliegenden Erfindung, ein gegenüber dem Stand der Technik verbessertes Verfahren zum Betrieb eines Abgasbrenners anzugeben, bei welchem insbesondere das Verrußen des Abgasbrenners deutlich reduziert oder sogar verhindert wird.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Die in den Patentansprüchen einzeln angeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft ein Verfahren zum Betrieb eines Abgasbrenners, aufweisend zumindest die folgenden Schritte:
a) Bereitstellen eines Luftmassenstroms für den Abgasbrenner und Aktivieren einer Zündfunktion des Abgasbrenners;
b) Bereitstellen eines Brennstoffmassenstroms für den Abgasbrenner;
c) Periodische Durchführung einer Reinigungsfunktion des Abgasbrenners, bei der das Verhältnis des Brennstoffmassenstroms und des Luftmassenstroms zueinander geändert wird;
d) Beenden der Bereitstellung des Brennstoffmassenstroms; und
e) Beenden der Bereitstellung des Luftmassenstroms.

Der Abgasbrenner ist vorzugsweise Bestandteil bzw. Anbauteil einer Abgasbehandlungsvorrichtung zur Reinigung der Abgase einer Verbrennungskraftmaschine eines Kraftfahrzeugs. Das Verfahren ist insbesondere bei Kraftfahrzeugen mit Dieselantrieb anwendbar, beispielsweise in Lastkraftfahrzeugen und Bussen. Das Verfahren kann auch in Schiffen oder Schienenfahrzeugen angewendet werden. In der Abgasbehandlungsvorrichtung mit dem Abgasbrenner ist vorzugsweise auch ein Partikelfilter angeordnet, der durch eine Temperaturerhöhung der Abgase in der Abgasbehandlungsvorrichtung mit Hilfe des Abgasbrenners effektiv gereinigt bzw. regeneriert werden kann. Die Abgasbehandlungsvorrichtung kann selbstverständlich weitere Trägerkörper zur Durchführung weiterer Abgasreinigungsfunktionen aufweisen.

Der Abgasbrenner hat vorzugsweise eine Luftzuleitung zur Zufuhr eines Luftmassenstroms und eine Brennstoffzuleitung zur Zufuhr eines Brennstoffmassenstroms sowie Mittel zur Mischung von Luft und Brennstoff, so dass ein Gemisch aus Brennstoff und Luft gebildet und bereitgestellt wird.

Die Zündfunktion löst die Verbrennung aus, wenn sowohl der Brennstoffmassenstrom als auch der Luftmassenstrom bereitgestellt werden. Für die Aktivierung der Zündfunktion kann beispielsweise ein (elektrischer) Zünder eingesetzt werden, mit dem der Abgasbrenner gezündet werden kann, wenn dem Abgasbrenner ein Brennstoffmassenstrom und ein Luftmassenstrom zugeführt werden. Der Zünder kann auch entfallen, insbesondere dann, wenn das Gemisch aus Brennstoff und Luft, durch die in der Abgasbehandlungsvorrichtung vorliegenden Bedingungen (insbesondere durch die dort vorliegende Temperatur) selbständig zündet. Dann entfällt eine separate Zündfunktion und die Zündfunktion wird dann durch die Bereitstellung des Luftmassenstroms (mit) aktiviert.

Die Verfahrensschritte a) bis e) des Verfahrens werden so, wie durch ihre Reihenfolge vorgegebenen, zeitlich hintereinander durchgeführt bzw. initiiert. Es ist klar erkennbar, dass einige der Schritte Aktionen betreffen, die zumindest teilweise auch nach der Initiierung eines der folgenden Schritte noch weiter durchgeführt bzw. aufrechterhalten werden.

Zunächst wird - zum Beispiel auf eine konkrete Vorgabe hin - der Luftmassenstrom für den Abgasbrenner bereitgestellt. Ein vorgegebenes und ggf. von Abgasparametern und/oder Betriebsparametern des Abgasbrenners anzupassendes Zeitintervall später beginnt die Bereitstellung des Brennstoffmassenstroms. Das Zeitintervall der Verzögerung des Brennstoffmassenstroms gegenüber dem Luftmassenstrom liegt beispielsweise zwischen 0,5 Sekunden und 10 Sekunden. Nachdem der Brennstoffmassenstrom ebenfalls (mit der gewünschten Rate) bereitgestellt wird, wird die Zündung aktiviert und der Abgasbrenner beginnt mit der Verbrennung des Brennstoff-Luft-Gemisches, um die Abgase in der Abgasbehandlungsvorrichtung zu erwärmen. Der nach Schritt b) beginnende Zeitraum wird hier als reguläre Betriebsphase des Abgasbrenners bezeichnet. Die reguläre Betriebsphase des Abgasbrenners nach Schritt b) endet mit Schritt d), wenn die Beendigung des Brennstoffmassenstroms durchgeführt wird. Durch das Beenden der Bereitstellung des Brennstoffmassenstroms erlischt die Flamme des Abgasbrenners. Sobald der Abgasbrenner erloschen ist bzw. nach Ablauf einer vorgegebenen Nachlaufzeit (um Brennstoff aus der Brennerdüse sicher zu entfernen), wird auch die Bereitstellung des Luftmassenstroms beendet (Schritt e)). Während der regulären Betriebsphase des Abgasbrenners zwischen Schritt b) und Schritt d) wird periodisch eine Reinigungsfunktion (kann auch als ein Reinigungsprozess bezeichnet werden) des Abgasbrenners durchgeführt (Schritt c)), bei der die Brennstoffzufuhr gedrosselt wird. Mit dem Begriff "periodisch" ist hier gemeint, dass die Durchführung der Reinigungsfunktion während der regulären Betriebsphase des Abgasbrenners regelmäßig oder unregelmäßig wiederholt wird. Mit dem Begriff "periodisch" ist hier jede beliebige Art der Wiederholung der Durchführung der Reinigungsfunktion oder des Reinigungsprozesses gemeint.

Durch die Veränderung des Verhältnisses des Brennstoffmassenstroms und des Luftmassenstroms bei der Durchführung der Reinigungsfunktion findet der Betrieb des Abgasbrenners mit abgeänderten Betriebsbedingungen statt, wobei diese abgeänderten Betriebsbedingungen dafür sorgen, dass Verrußungen des Abgasbrenners gegenüber der Situation bei regulärer Betriebsphase reduziert, verhindert und/oder aufgelöst werden. Durch dieses Verfahren zum Betrieb eines Abgasbrenners wird es ermöglicht, einen Abgasbrenner länger bzw. dauerhaft mit einer hohen Brennleistung zu betreiben, ohne dass es beispielsweise einer mechanischen Reinigung des Brenners bedarf. Nach Schritt c) kann wieder die reguläre Betriebsphase fortgesetzt werden.

Gegebenenfalls kann Schritt c) auch mehrmals (verzögert) hintereinander ausgeführt werden, bevor Schritt d) unmittelbar oder zeitversetzt initiiert wird.

Besonders vorteilhaft ist das Verfahren, wenn während Schritt c) ein Lambda-Wert des Verhältnisses des Brennstoffmassenstroms und des Luftmassenstroms gegenüber dem regulären Betrieb des Abgasbrenners zwischen Schritt b) und Schritt d) erhöht wird. Besonders bevorzugt wird während Schritt c) der Brennstoffmassenstrom gedrosselt, um den Lambda-Wert zu erhöhen.

Mit einem Lambda-Wert wird das Verhältnis des Brennstoffmassenstroms und des Luftmassenstroms beschrieben. Ein Lambda-Wert von 1.0 entspricht dabei einem stöchiometrischen Verhältnis von Brennstoffmassenstrom und Luftmassenstrom, bei dem sowohl der Sauerstoffanteil der dem Abgasbrenner zugeführten Luft als auch der dem Abgasbrenner zugführte Brennstoff vollständig verbrannt werden. Lambda-Werte größer 1.0 entsprechen einem Luftüberschuss und werden dabei auch als "mager" bezeichnet. Lambda-Werte kleiner als 1.0 entsprechen einem Brennstoffüberschuss und werden als "fett" bezeichnet. Insbesondere bei einem fetten Betrieb des Abgasbrenners sind besonders hohe Brennerleistungen möglich. Damit geht allerdings auch eine erhöhte Rußbildung einher, so dass der Abgasbrenner schneller verrußt. Daher ist es vorteilhaft, während der Reinigungsfunktion des Abgasbrenners in Schritt c) die Brennstoffzufuhr zu drosseln und ggf. gleichzeitig den Luftmassenstrom aufrechtzuerhalten oder sogar zu erhöhen, damit der Lambda-Wert gegenüber dem regulären Betrieb erhöht wird. Dies verhindert die Rußbildung und sorgt gegebenenfalls sogar dafür, dass bereits ausgebildeter Ruß abbrennt.

Weiterhin ist das Verfahren vorteilhaft, wenn Schritt c) während des regulären Betriebs des Abgasbrenners zwischen Schritt b) und Schritt d) mindestens alle 10 Minuten durchgeführt wird.

Besonders bevorzugt ist sogar, dass Schritt c) mit einer beliebigen regelmäßigen Wiederholrate zwischen 3 Minuten (bevorzugt 5 Minuten) und 9 Minuten durchführt wird. Die Wiederholrate kann (insbesondere in diesem Bereich) variieren. Bei der Festlegung der (aktuellen) Wiederholrate kann auch die Rußbildung durch die Verbrennungskraftmaschine des Kraftfahrzeuges und/oder durch den Abgasbrenner selbst berücksichtigt werden. Jede Durchführung der Reinigungsfunktion in Schritt c) dauert vorzugsweise zwischen 2 Minuten und 3 Minuten. Die zwischen den einzelnen Durchführungen der Reinigungsfunktion stattfindenden regulären Betriebsphasen des Abgasbrenners (Brennphasen) dauern dementsprechend zwischen 2 Minuten und 7 Minuten. Dementsprechend hat Schritt c) bzw. die Reinigungsfunktion einen Anteil zwischen 20 Prozent und 50 Prozent der Gesamtbetriebszeit des Abgasbrenners. Es hat sich herausgestellt, dass das beschriebene Verfahren eine höhere mittlere Leistung über die Gesamtbetriebsdauer des Abgasbrenners hinweg ermöglicht, als dies mit einem kontinuierlichen Betrieb des Abgasbrenners ohne Reinigungsfunktion möglich wäre, obwohl der Zeitanteil der Reinigungsfunktion (zwischen 20 Prozent und 50 Prozent) so hoch ist.

Nach einer Startphase des Abgasbrenners (zu welcher auch die Schritte a) und b) zählen) wird vorzugsweise unmittelbar eine Reinigungsfunktion (Schritt c)) durchgeführt. Dies hat den Vorteil, dass der Betrieb des Abgasbrenners weitgehend unabhängig davon ist, ob der Abgasbrenner vor Inbetriebnahme verrußt war oder nicht. Gegebenenfalls kann die Reinigungsfunktion (Schritt c)) auch immer vor der Deaktivierung des Abgasbrenners durchgeführt werden, um zu verhindern, dass der Abgasbrenner im verunreinigten Zustand deaktiviert wird.

Außerdem ist das Verfahren vorteilhaft, wenn bei der Durchführung der Reinigungsfunktion in Schritt c) jeweils mindestens einmal eine erneute Aktivierung der Zündfunktion des Abgasbrenners durchgeführt wird.

Eine erneute Zündung des Abgasbrenners kann beispielsweise mit einem Zünder durchgeführt werden, der ebenfalls in Schritt b) verwendet wird, um das Gemisch aus Luftmassenstrom und Brennstoffmassenstrom zu zünden. Der Zünder kann beispielsweise eine elektrische Spule, eine Zündkerze oder jegliche andere Einrichtung zur Auslösung eines Zündfunkens zur Zündung des Gemischs sein.

Darüber hinaus ist das Verfahren vorteilhaft, wenn die Zündfunktion zwischen den Schritten a) und e) kontinuierlich aktiviert ist und eine periodische Wiederholung von Zündimpulsen umfasst.

Besonders bevorzugt wird ein (elektrischer) Zünder des Abgasbrenners mit einer Wiederholrate zwischen 0,5 Sekunden und 3 Sekunden aktiviert. So kann sichergestellt werden, dass die Verbrennung des Luftmassenstroms und des Brennstoffmassenstroms während des Betriebs des Abgasbrenners nicht (bzw. nur sehr kurz) unterbrochen wird. Die periodisch wiederholten Zündimpulse zünden das Gemisch aus Luftmassenstrom und Brennstoff direkt wieder, falls die Verbrennung unterbrochen wurde. Eine Unterbrechung der Verbrennung kann beispielsweise durch eine kurzzeitige Veränderung der Betriebsbedingungen in der Abgasbehandlungsvorrichtung und/oder durch eine kurzzeitige Unterbrechung des Brennstoffmassenstroms oder des Luftmassenstroms auftreten. Der einzelne Zündimpuls hat vorzugsweise eine Dauer von weniger als 0,2 Sekunden und wird beispielsweise durch eine elektrische Entladung einer Spule oder eines Kondensators erzeugt.

Zusätzlich zu der kontinuierlichen Wiederholung von Zündimpulsen umfasst die Zündfunktion vorzugsweise einen besonders langen Zündimpuls in einer Startphase während der Verfahrensschritte a) und b). Durch einen solchen besonders langen Zündimpuls zum Start kann eine sichere Aktivierung des Abgasbrenners erfolgen. Durch diesen Zündimpuls zum Start kann in einer bevorzugten Ausführungsform des Verfahrens auch ein Aufheizen des Abgasbrenners stattfinden, um die Verbrennung zu starten.

Außerdem ist das Verfahren vorteilhaft, wenn während der Durchführung der Reinigungsfunktion in Schritt c) eine Abbrenntemperatur des Abgasbrenners erhöht ist und eine Brennleistung des Abgasbrenners reduziert ist.

Besonders bevorzugt ist, wenn der Abgasbrenner während Schritt c) mit einem mageren Gemisch von Luft und Brennstoff betrieben wird. Bei einem mageren Gemisch tritt üblicherweise eine erhöhte Abbrenntemperatur an dem Abgasbrenner auf. Gleichzeitig ist allerdings die Brennerleistung reduziert, wobei mit dem Begriff "Brennerleistung" hier die insgesamt vom Abgasbrenner erzeugte Menge an Wärmeenergie pro Zeiteinheit gemeint ist. Zum Erreichen von besonders hohen Brennerleistungen ist es vorteilhaft, wenn der Brenner mit einem fetten Gemisch betrieben wird. Durch die Reinigungsfunktion kann erreicht werden, dass der Abgasbrenner trotzdem nicht dauerhaft verrußt.

Auch ist das Verfahren vorteilhaft, wenn während des regulären Betriebs des Abgasbrenners zwischen Schritt b) und Schritt d) ein Verrußungsgrad des Abgasbrenners bestimmt wird, und der Schritt c) durchgeführt wird, wenn ein Verrußungsgrad des Abgasbrenners über einem Schwellwert liegt.

Der Verrußungsgrad kann berechnet, abgeschätzt und/oder (sensorisch mit einem dafür geeigneten Sensor) ermittelt werden. Ein derartiger Sensor kann in Abgasströmungsrichtung hinter dem Abgasbrenner an der Abgasbehandlungsvorrichtung angeordnet sein. Der Sensor kann den Verrußungsgrad beispielsweise anhand von abgelösten Verrußungen mit Hilfe erkennen. Verrußungen können beispielsweise durch einen Photowiderstand erkannt werden, dessen elektrischer Widerstand sich ändert, wenn eine Verrußung den Photowiderstand verdunkelt. Der Sensor kann auch einen Temperatursensor umfassen, der erkennt, dass die mit Hilfe des Abgasbrenners erreichte Temperaturerhöhung der Abgase in der Abgasbehandlungsvorrichtung unter einen Schwellwert sinkt. Dies ermöglicht ebenfalls einen Rückschluss auf den Verrußungsgrad des Abgasbrenners. Je nach Art und Genauigkeit der Bestimmung des Verrußungsgrades kann ein (angepasster) Schwellwert festgelegt bzw. vorgegeben sein.

Die zielgerichtete Durchführung der Reinigungsfunktion des Abgasbrenners erfolgt nur dann, wenn der Verrußungsgrad einen Schwellwert übersteigt, wodurch erreicht wird, dass die Reinigungsfunktion (bzw. Schritt c)) besonders selten durchgeführt wird. Dies eröffnet die Möglichkeit, die von dem Brenner insgesamt erzeugte Brennerleistung weiter zu erhöhen, weil die Reinigungsfunktion (Schritt c)) mit reduzierter Brennerleistung besonders selten durchgeführt wird.

Besonders vorteilhaft ist das beschriebene Verfahren, wobei zwischen Schritt a) und Schritt e) der Abgasbrenner mit einem fetten Gemisch betrieben wird.

Der fette Betrieb des Abgasbrenners ermöglicht es besonders hohe Brennerleistungen zu verwirklichen auch wenn nur ein begrenzter Luftmassenstrom zur Verfügung steht. Der zur Verfügung stehende Luftmassenstrom kann beispielsweise durch die Dimension der Druckluftversorgung in einem Kraftfahrzeug limitiert sein. Trotzdem sind insbesondere zum schnellen Aufheizen regelmäßig sehr hohe Brennerleistungen notwendig. Der fette Betrieb des Brenners ist unter den genannten Bedingungen ein besonders geeigneter Weg ein besonders schnelles Aufheizen mit dem Brenner zu realisieren. Mit einem Betrieb des Abgasbrenners mit einem fetten Gemisch ist hier insbesondere gemeint, dass der Betrieb des Brenners zu einem wesentlichen Anteil der Gesamtbetriebszeit des Brenners mit dem fetten Gemisch erfolgt, wobei ein wesentlicher Anteil hier insbesondere einen Anteil von mehr als 10 Prozent der Betriebszeit des Brenners, bevorzugt mehr als 20 Prozent der Betriebszeit des Brenners und ganz besonders bevorzugt mehr als 50 Prozent der Betriebszeit des Brenners umfasst. In einer bevorzugten Variante wird der Brenner sogar immer dann fett betrieben, wenn die Reinigungsfunktion gemäß Schritt c) gerade nicht aktiviert ist.

Ein fetter Betrieb des Brenners ist hier insbesondere ein Betrieb des Brenners mit einem Gemisch mit einem Lambdawert von kleiner 1,0 vorzugsweise sogar kleiner 0,95 oder sogar kleiner 0,9. Das Gemisch ist hier durch das Verhältnis von Luftmassenstrom und Brennstoffmassenstrom definiert. Solche noch weiter reduzierten Lambdawerte ermöglichen besonders hohe Brennerleistungen.

Insbesondere bei einem fetten Betrieb des Brenners ist eine regelmäßige Durchführung einer Reinigungsfunktion gemäß Schritt c) wichtig. Die Reinigungsfunktion ist eine wichtige Voraussetzungen für den fehlerfreien und dauerhaften Betrieb des Brenners mit einem fetten Gemisch, weil beim Betrieb mit einem fetten Gemisch der Brenner besonders schnell verrußt, so dass eine regelmäßige Entfernung des Rußes mit der Reinigungsfunktion erforderlich ist.

Weiter wird ein Kraftfahrzeug vorgeschlagen, aufweisend eine Verbrennungskraftmaschine und eine Abgasbehandlungsvorrichtung zur Reinigung des Abgases der Verbrennungskraftmaschine sowie einen Abgasbrenner zum Heizen der Abgasbehandlungsvorrichtung und ein Steuergerät, mit dem der Abgasbrenner gemäß dem beschriebenen Verfahren betrieben werden kann.

Das Steuergerät ist vorzugsweise Bestandteil einer Motorsteuerung des Kraftfahrzeugs und in dem Steuergerät sind entsprechende Routinen zur Durchführung des beschriebenen Verfahrens hinterlegt.

Das beschriebene Verfahren und der Abgasbrenner werden insbesondere dazu eingesetzt, um einen Partikelfilter in einer Abgasbehandlungsvorrichtung eines Kraftfahrzeuges zu reinigen. Durch das Verfahren und den Abgasbrenner wird die Temperatur in der Abgasbehandlungsvorrichtung stark erhöht und es können abgelagerte Kohlenstoffpartikel in dem Partikelfilter abgebrannt werden. Die gesamte Dauer des Verfahrens (Schritt a) bis Schritt e)) beträgt bevorzugt zwischen 5 Minuten und 60 Minuten (insbesondere ca. 30 Minuten). Das Verfahren wird vorzugsweise (immer) dann ausgeführt, wenn eine Reinigung eines Partikelfilters erforderlich ist. Der Start des Verfahrens kann beispielsweise in Abhängigkeit von einer der folgenden Bedingungen ausgelöst werden:
- zeitgesteuert (beispielsweise täglich oder alle zwei Tage),
- in Abhängigkeit der Betriebszeit eines Kraftfahrzeuges (beispielsweise immer nach acht Betriebsstunden des Kraftfahrzeuges), und
- in Abhängigkeit von einem Abgasgegendruck, der durch die Beladung des Partikelfilters ausgelöst wird.

Es sind auch weitere Bedingungen zur Auslösung des Startes des Verfahrens und/oder Kombinationen der oben erläuterten Bedingungen möglich.

Die Erfindung, sowie das technische Umfeld sollen nachfolgend anhand der Figuren näher erläutert werden. Die Figuren zeigen eine besonders bevorzugte Ausführungsvariante der Erfindung, auf die die Erfindung jedoch nicht begrenzt ist. Insbesondere ist darauf hinzuweisen, dass die Figuren und insbesondere die in den Figuren dargestellten Größenverhältnisse nur schematisch sind. Es zeigen:
- Fig. 1:: ein Kraftfahrzeug, aufweisend einen Abgasbrenner, der nach dem beschriebenen Verfahren betrieben werden kann, und
- Fig. 2:: ein Diagramm zur Verdeutlichung des beschriebenen Verfahrens.

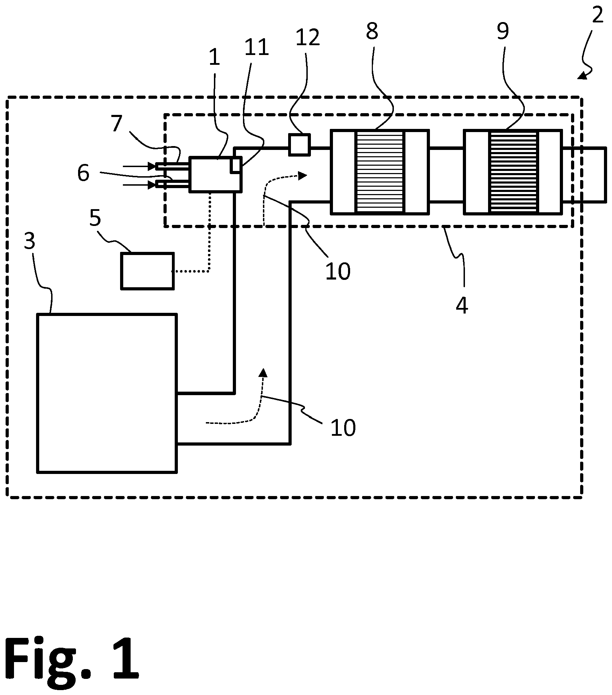

In Fig. 1 ist ein Kraftfahrzeug 2 mit einer Verbrennungskraftmaschine 3 und einer Abgasbehandlungsvorrichtung 4 zur Reinigung der Abgase der Verbrennungskraftmaschine 3 dargestellt. Die Abgasbehandlungsvorrichtung 4 ist vom Abgas der Verbrennungskraftmaschine 3 mit einer Abgasströmungsrichtung 10 durchströmbar. Die Abgasbehandlungsvorrichtung 4 weist einen Partikelfilter 8 und einen weiteren Trägerköper 9 auf. Dieser Trägerkörper 9 kann beispielsweise ein SCR-Katalysator sein. Die Abgasbehandlungsvorrichtung 4 weist darüber hinaus einen Abgasbrenner 1 auf, mit dem die Temperatur der Abgase in der Abgasbehandlungsvorrichtung 4 erhöht werden kann. Der Abgasbrenner 1 wird über eine Luftzuleitung 7 mit einem Luftmassenstrom und über eine Brennstoffzuleitung 6 mit einem Brennstoffmassenstrom versorgt. An dem Abgasbrenner 1 ist auch ein Zünder 11 vorgesehen, mit welchem der Abgasbrenner 1 gezündet werden kann. Der Abgasbrenner 1 ist an ein Steuergerät 5 angeschlossen, welches zur Durchführung des beschriebenen Verfahrens mit dem Abgasbrenner 1 eingerichtet ist. Die Abgasbehandlungsvorrichtung 4 weist auch einen Sensor 12 auf, mit dem die Verrußung des Abgasbrenners 1 überwacht werden kann.

Zum Betrieb eines Abgasbrenners 1 wird in Schritt a) ein Luftmassenstrom für den Abgasbrenner 1 bereitgestellt. Anschließend wird in Schritt b) ein Brennstoffmassenstrom für den Abgasbrenner 1 bereitgestellt und der Abgasbrenner 1 wird gezündet. Dann erfolgt die periodische Durchführung einer Reinigungsfunktion des Abgasbrenners 1, bei der die Brennstoffzufuhr gedrosselt wird (Schritt c)). Anschließend wird die Bereitstellung des Brennstoffmassenstroms beendet (Schritt d)). Dann wird in einem abschließenden Schritt e) die Bereitstellung des Luftmassenstroms ebenfalls beendet.

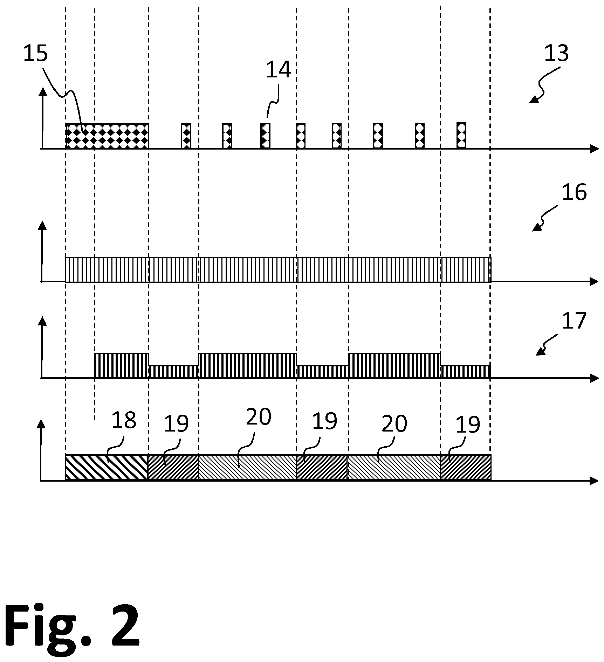

Fig. 2 zeigt ein Diagramm zur Verdeutlichung des beschriebenen Verfahrens. Im unteren Bereich des Diagramms sind die einzelnen Phasen des Verfahrens dargestellt. Zu erkennen ist eine Startphase 16, die insbesondere die Schritte a) und b) umfasst. Daran anschließend finden abwechselnd eine Reinigungsphase 19 (Schritt c)) und eine Brennphase 20 statt. Zu beachten ist, dass das Verfahren jeweils mit einer Reinigungsphase 19 gestartet und auch beendet wird.

Im obersten Abschnitt des Diagramms ist die Zündfunktion 13 dargestellt, welche einen periodisch wiederholten Zündimpuls 14 und einen Startzündimpuls 15 umfasst. Darunter sind ein konstanter Luftmassenstrom 16 und ein Brennstoffmassenstrom 17 dargestellt, wobei der Brennstoffmassenstrom 17 zur Durchführung der Reinigungsphase jeweils reduziert wird.

### Bezugszeichenliste

- 1: Abgasbrenner
- 2: Kraftfahrzeug
- 3: Verbrennungskraftmaschine
- 4: Abgasbehandlungsvorrichtung
- 5: Steuergerät
- 6: Brennstoffzuleitung
- 7: Luftzuleitung
- 8: Partikelfilter
- 9: Trägerkörper
- 10: Abgasströmungsrichtung
- 11: Zünder
- 12: Sensor
- 13: Zündfunktion
- 14: Zündimpuls
- 15: Startzündimpuls
- 16: Luftmassenstrom
- 17: Brennstoffmassenstrom
- 18: Startphase
- 19: Reinigungsphase
- 20: Brennphase

## Patentansprüche

1. Verfahren zum Betrieb eines Abgasbrenners (1), aufweisend zumindest die folgenden Schritte:
a) Bereitstellen eines Luftmassenstroms für den Abgasbrenner (1) und Aktivieren einer Zündfunktion des Abgasbrenners (1);
b) Bereitstellen eines Brennstoffmassenstroms für den Abgasbrenner (1);
c) Periodische Durchführung einer Reinigungsfunktion des Abgasbrenners (1), bei der das Verhältnis des Brennstoffmassenstroms und des Luftmassenstroms zueinander geändert wird;
d) Beenden der Bereitstellung des Brennstoffmassenstroms;
e) Beenden der Bereitstellung des Luftmassenstroms.

2. Verfahren nach Patentanspruch 1, wobei während Schritt c) ein Lambda-Wert des Verhältnisses des Brennstoffmassenstroms und des Luftmassenstroms gegenüber dem regulären Betrieb des Abgasbrenners (1) zwischen Schritt b) und Schritt d) erhöht wird.

3. Verfahren nach Patentanspruch 1 oder 2, wobei Schritt c) während des regulären Betriebs des Abgasbrenners (1) zwischen Schritt b) und Schritt d) mindestens alle 10 Minuten durchgeführt wird.

4. Verfahren nach einem der vorhergehenden Patentansprüche, wobei bei der Durchführung der Reinigungsfunktion in Schritt c) jeweils mindestens einmal eine erneute Aktivierung der Zündfunktion des Abgasbrenners (1) durchgeführt wird.

5. Verfahren nach einem der vorhergehenden Patentansprüche, wobei die Zündfunktion zwischen den Schritten a) und e) kontinuierlich aktiviert ist und eine periodische Wiederholung von Zündimpulsen umfasst.

6. Verfahren nach einem der vorhergehenden Patentansprüche, wobei während der Durchführung der Reinigungsfunktion in Schritt c) eine Abbrenntemperatur des Abgasbrenners (1) erhöht ist und eine Brennleistung des Abgasbrenners (1) reduziert ist.

7. Verfahren nach einem der vorhergehenden Patentansprüche, wobei während des regulären Betriebs des Abgasbrenners (1) zwischen Schritt b) und Schritt d) ein Verrußungsgrad des Abgasbrenners (1) bestimmt wird und der Schritt c) durchgeführt wird, wenn ein Verrußungsgrad des Abgasbrenners (1) über einem Schwellwert liegt.

8. Verfahren nach einem der vorhergehenden Patentansprüche, wobei zwischen Schritt a) und Schritt e) der Abgasbrenner (1) mit einem fetten Gemisch betrieben wird.

9. Kraftfahrzeug (2), aufweisend eine Verbrennungskraftmaschine (3) und eine Abgasbehandlungsvorrichtung (4) zur Reinigung der Abgase der Verbrennungskraftmaschine (3), einen Abgasbrenner (1) zum Heizen der Abgasbehandlungsvorrichtung (4) sowie ein Steuergerät (5), mit dem der Abgasbrenner (1) gemäß einem Verfahren nach einem der vorhergehenden Patentansprüche betrieben werden kann, wobei in dem Steuergerät (5) entsprechende Routinen zur Durchführung des Verfahrens hinterlegt sind.

## Claims

1. Method for operation of an exhaust gas combustor (1) comprising at least the following steps:
a) providing an air mass flow for the exhaust gas combustor (1) and activating an ignition function of the exhaust gas combustor (1);
b) providing a fuel mass flow for the exhaust gas combustor (1);
c) periodical performance of a cleaning function of the exhaust gas combustor (1), in which the ratio between the fuel mass flow and the air mass flow is altered,
d) terminating the provision of the fuel mass flow;
e) terminating the provision of the air mass flow.

2. Method according to claim 1, wherein during step c) a lambda-value of the ratio of the fuel mass flow and the air mass flow is increased compared to the regular operation of the exhaust gas combustor (1) between steps b) and d).

3. Method according to claim 1 or 2, wherein step c) is performed at least every 10 minutes during the regular operation of the exhaust gas combustor (1) between steps b) and d).

4. Method according to one of the preceding claims, wherein during the performance of step c) at least once a respective renewed activation of the ignition function of the exhaust gas combustor (1) is performed.

5. Method according to one of the preceding claims, wherein the ignition function is steadily activated between steps a) and e) and comprises a periodical repetition of ignition pulses.

6. Method according to one of the preceding claims, wherein during the performance of the cleaning function in step c) a combustion temperature of the exhaust gas combustor (1) is increased and a burning power of the exhaust gas combustor (1) is decreased.

7. Method according to one of the preceding claims, wherein during the regular operation of the exhaust gas combustor (1) between steps b) and d) a soot degree of the exhaust gas combustor (1) is determined and step c) is performed if a soot degree of the exhaust gas combustor (1) is above a threshold value.

8. Method according to one of the preceding claims, wherein between steps a) and e) the exhaust gas combustor (1) is operated with a rich mixture.

9. Motor vehicle (2) comprising a combustion engine (3) and an exhaust gas treatment device (4) for cleaning the exhaust gases of the combustion engine (3), an exhaust gas combustor (1) for heating the exhaust gas treatment device (4) and a control device (5), by means of which the exhaust gas combustor (1) can be operated by a method according to one of the preceding claims, wherein respective routines for performing the method are stored in the control device (5).

## Revendications

1. Procédé de fonctionnement d'un brûleur à gaz d'échappement (1), présentant au moins les étapes suivantes:
a) fournir un courant massique d'air pour le brûleur à gaz d'échappement (1) et activer une fonction d'allumage du brûleur à gaz d'échappement (1);
b) fournir un courant massique de combustible pour le brûleur à gaz d'échappement (1);
c) exécuter périodiquement une fonction de nettoyage du brûleur à gaz d'échappement (1), dans laquelle on fait varier la proportion du courant massique de combustible et le courant massique d'air l'un par rapport à l'autre;
d) mettre fin à la fourniture du courant massique de combustible;
e) mettre fin à la fourniture du courant massique d'air.

2. Procédé selon la revendication 1, dans lequel pendant l'étape c) on augmente une valeur lambda de la proportion du courant massique de combustible et du courant massique d'air par rapport au fonctionnement régulier du brûleur à gaz d'échappement (1) entre l'étape b) et l'étape d).

3. Procédé selon la revendication 1 ou 2, dans lequel on exécute l'étape c) au moins toutes les 10 minutes pendant le fonctionnement régulier du brûleur à gaz d'échappement (1) entre l'étape b) et l'étape d).

4. Procédé selon l'une quelconque des revendications précédentes, dans lequel, lors de l'exécution de la fonction de nettoyage à l'étape c), on exécute respectivement au moins une fois une nouvelle activation de la fonction d'allumage du brûleur à gaz d'échappement (1).

5. Procédé selon l'une quelconque des revendications précédentes, dans lequel la fonction d'allumage est activée en continu entre les étapes a) et e) et comprend une répétition périodique d'impulsions d'allumage.

6. Procédé selon l'une quelconque des revendications précédentes, dans lequel pendant l'exécution de la fonction de nettoyage à l'étape c) une température de combustion du brûleur à gaz d'échappement (1) est augmentée et une puissance de combustion du brûleur à gaz d'échappement (1) est réduite.

7. Procédé selon l'une quelconque des revendications précédentes, dans lequel pendant le fonctionnement régulier du brûleur à gaz d'échappement (1) entre l'étape b) et l'étape d), on détermine un degré d'encrassement du brûleur à gaz d'échappement (1) et on exécute l'étape c) lorsqu'un degré d'encrassement du brûleur à gaz d'échappement (1) est supérieur à une valeur de seuil.

8. Procédé selon l'une quelconque des revendications précédentes, dans lequel le brûleur à gaz d'échappement (1) fonctionne avec un mélange riche entre l'étape a) et l'étape e).

9. Véhicule automobile (2), présentant un moteur à combustion interne (3) et un dispositif de traitement de gaz d'échappement (4) pour la purification des gaz d'échappement du moteur à combustion interne (3), un brûleur à gaz d'échappement (1) pour le chauffage du dispositif de traitement de gaz d'échappement (4) ainsi qu'un appareil de commande (5), avec lequel on peut conduire un procédé selon l'une quelconque des revendications précédentes, dans lequel des routines correspondantes pour l'exécution du procédé sont mémorisées dans l'appareil de commande (5).
